# EUROPEAN PATENT APPLICATION

(11) **EP 4 815 429 A1**
(43) Date of publication of application: **30.09.2026**
(21) Application number: 25196748.5
(22) Date of filing: 19.08.2025
(51) Int. Cl.: H04N 1/60, H04N 1/54

(54) **INFORMATION PROCESSING SYSTEM, INFORMATION PROCESSING METHOD, AND PROGRAM**

(30) Priority: 24.03.2025 JP 2025047708
(71) Applicant: FUJIFILM Business Innovation Corp., Minato-ku Tokyo (JP)
(72) Inventor: HAGIWARA, Hisashi, Yokohama-shi (JP)
(74) Representative: Haseltine Lake Kempner LLP

(57) **Abstract**

An information processing system includes a processor configured to generate and output an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

## Description

### Background

### (i) Technical Field

The present disclosure relates to information processing systems, information processing methods, and programs.

### (ii) Related Art

Japanese Unexamined Patent Application Publication No. 2020-072280 discloses a method for generating print data of a color chart that facilitates a search for a color patch suitable for printing a designated color.

Japanese Unexamined Patent Application Publication No. 2013-090182 discloses a printer that determines whether to cause a second print unit to perform printing in accordance with an evaluation value with respect to pixels, of an image to be reproduced, outside a color gamut of a first print unit.

### Summary

In order to expand the color gamut of images to be printed by printers in recent years, printing is performed by using colorants of special colors in addition to colorants of basic colors, which are cyan (C), magenta (M), yellow (Y), and black (K) colors. Examples of such special colors include fluorescent pink (P), fluorescent green (G), and fluorescent orange (O).

Using such colorants of special colors enables reproduction of a larger number of designated colors (also referred to as "custom colors"). However, users have been manually adjusting the respective amounts of the colorants for reproducing the designated colors. Determining the optimal settings may require a repeated process of trial and error.

In addition to the user adjusting the amount of each colorant, there has been developed a system that calculates and outputs the amount of each colorant.

However, the colorants of special colors are generally expensive. When a designated color is reproduced by using a colorant of a special color, there is no method for enabling the user to visually ascertain how close the designated color is achieved.

Accordingly, it is an object of the present disclosure to provide an information processing system, an information processing method, and a program that enable a user to check the reproducibility of a designated color, designated based on color identification information including a color name and a color code, in a case where a colorant of a basic color is used and in a case where the colorant of the basic color and a colorant of a special color are used.

According to a first aspect of the present disclosure, there is provided an information processing system including a processor configured to generate and output an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

According to a second aspect of the present disclosure, in the information processing system according to the first aspect, the processor may be configured to generate and output the color reproduction sample of the designated color designated via an interface used for selecting the designated color by a user.

According to a third aspect of the present disclosure, in the information processing system according to the first aspect, the processor may be configured to generate and output the color reproduction sample of the designated color if the designated color is included in a print command for image formation.

According to a fourth aspect of the present disclosure, in the information processing system according to the second or third aspect, the processor may be configured to output a numerical value of a color difference between the designated color and a color in the generated color reproduction sample.

According to a fifth aspect of the present disclosure, in the information processing system according to the fourth aspect, if the colorant of the special color includes a plurality of colorants of special colors installed in a printer, the processor may be configured to generate and output the color reproduction sample for each combination including at least one of the plurality of special colors.

According to a sixth aspect of the present disclosure, in the information processing system according to the fourth aspect, the processor may be configured to output the image of the color reproduction sample by performing at least one of printing of the image onto a sheet surface and displaying of the image on a screen.

According to a seventh aspect of the present disclosure, in the information processing system according to the sixth aspect, the processor may be configured to display the image of the color reproduction sample on the screen and to display the numerical value of the color difference between the designated color and the color in the generated color reproduction sample on the screen.

According to an eighth aspect of the present disclosure, in the information processing system according to any one of the first to seventh aspects, if a color difference from the designated color in a case where the designated color is reproduced by using a colorant of a special color not installed in a printer is smaller than a color difference from the designated color in a case where the designated color is reproduced by using the colorants installed in the printer, the processor may be configured to suggest using the colorant of the special color not installed in the printer.

According to a ninth aspect of the present disclosure, in the information processing system according to the eighth aspect, the processor may be configured to output a numerical value of the color difference from the designated color in the case where the designated color is reproduced by using the colorant of the special color not installed in the printer.

According to a tenth aspect of the present disclosure, there is provided a program causing a computer of an information processing system including a processor to execute a process including generating and outputting an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

According to an eleventh aspect of the present disclosure, there is provided an information processing method including generating and outputting an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

The information processing system according to the first aspect of the present disclosure may enable a user to check the reproducibility in the case where the designated color designated based on the color identification information including the color name and the color code is reproduced by using the colorant of the basic color alone and in the case where the designated color is reproduced by using the colorant of the basic color and the colorant of the special color.

The information processing system according to the second aspect of the present disclosure may enable the user to select a color reproduction method with respect to the designated color selected by the user.

With the information processing system according to the third aspect of the present disclosure, the reproducibility of the designated color included in the print command may be compared between the case where the designated color is reproduced by using the colorant of the basic color alone and the case where the designated color is reproduced by using the colorant of the special color.

The information processing system according to the fourth aspect of the present disclosure may enable a quantitative evaluation of color reproduction accuracy, and may enable the user to ascertain the reproduction result more accurately than in a case where the color difference is not output as a numerical value.

The information processing system according to the fifth aspect of the present disclosure enables the user to consider an optimal combination of special colors in the case where multiple special colors are available.

The information processing system according to the sixth aspect of the present disclosure enables checking of color reproducibility without having to physically check the color reproduction resembling the actual print result or without having to physically perform printing.

The information processing system according to the seventh aspect of the present disclosure enables quantitative checking of color reproducibility on the screen without having to physically perform printing.

The information processing system according to the eighth aspect of the present disclosure may present to the user that a color with a small color difference from the designated color is reproducible better by using the colorant of the special color not installed in the printer.

With the information processing system according to the ninth aspect of the present disclosure, the effect achieved when the colorant of the special color not installed in the printer is used may be quantitatively presented to the user.

The program according to the tenth aspect of the present disclosure may cause the computer to perform output so as to enable a user to check the reproducibility in the case where the designated color designated based on the color identification information including the color name and the color code is reproduced by using the colorant of the basic color alone and in the case where the designated color is reproduced by using the colorant of the basic color and the colorant of the special color.

The information processing method according to the eleventh aspect of the present disclosure may enable a user to check the reproducibility in the case where the designated color designated based on the color identification information including the color name and the color code is reproduced by using the colorant of the basic color alone and in the case where the designated color is reproduced by using the colorant of the basic color and the colorant of the special color.

### Brief Description of the Drawings

An exemplary embodiment of the present disclosure will be described in detail based on the following figures, wherein:
Fig. 1 illustrates an example of the configuration of an image processing system according to an exemplary embodiment;
Fig. 2 illustrates a hardware configuration of a computer according to the exemplary embodiment;
Fig. 3 is a block diagram illustrating a functional configuration of the computer according to the exemplary embodiment;
Fig. 4 illustrates a hardware configuration of a printer according to the exemplary embodiment;
Fig. 5 is a block diagram illustrating a functional configuration of the printer according to the exemplary embodiment;
Fig. 6 is a flowchart illustrating an example of the operation of the image processing system according to the exemplary embodiment;
Fig. 7 illustrates an example of a menu screen displayed on a display device according to the exemplary embodiment;
Fig. 8 illustrates an example of an output display screen for a screen-display color reproduction sample according to the exemplary embodiment;
Fig. 9 illustrates an example of an output display screen for a screen-display chart image according to the exemplary embodiment; and
Fig. 10 illustrates an example of a recommendation screen according to the exemplary embodiment.

### Detailed Description

An information processing system 10 according to an exemplary embodiment of the present disclosure will now be described in detail with reference to the drawings.

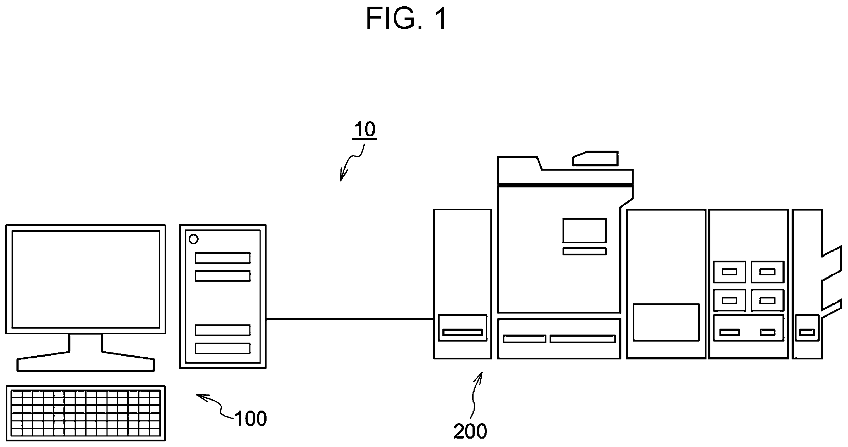

Fig. 1 illustrates an example of the configuration of the information processing system 10 according to the exemplary embodiment of the present disclosure. The information processing system 10 includes a computer 100 and a printer 200. The computer 100 and the printer 200 are connected to each other directly or via a network. The computer 100 is also called a digital front end. The computer 100 serves as a component that performs print-command management, data processing, color management, and communication with the printer 200. The printer 200 is normally called a projection printer.

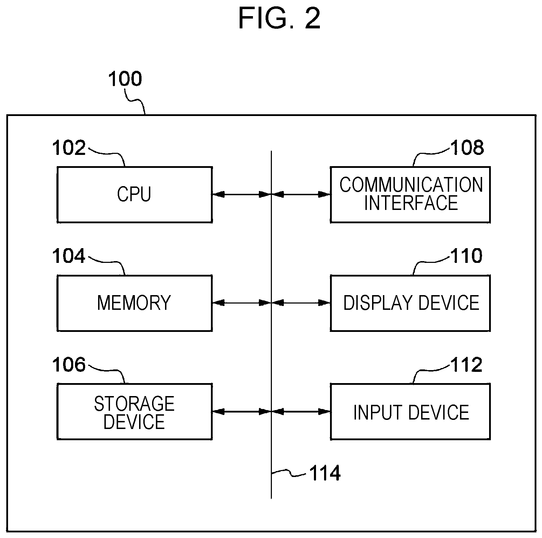

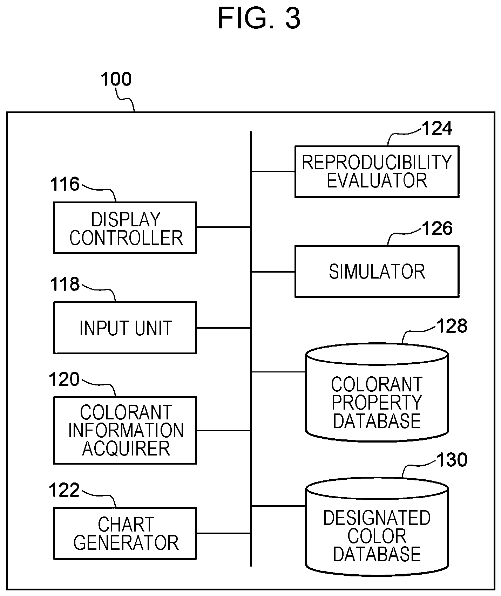

The computer 100 will now be described with reference to Figs. 2 and 3. Fig. 2 illustrates a hardware configuration of the computer 100. As shown in Fig. 2, the computer 100 includes a central processing unit (CPU) 102, a memory 104, a storage device 106, a communication interface 108, a display device 110, and an input device 112, each of which is connected to a system bus 114.

The CPU 102 performs centralized control over the operation of each component of the computer 100 based on a control program stored in the storage device 106.

The memory 104 has stored therein runtime data of the control program required for the operation of the computer 100, as well as temporary data of a print command. The memory 104 is also used as an area where colorant information acquired by a colorant information acquirer 120, to be described later, is temporarily stored. The memory 104 is also used as an area where a temporary processing result, such as a calculation result obtained by a reproducibility evaluator 124, is stored.

The storage device 106 is constituted of a hard disk drive or a solid state drive. The storage device 106 has stored therein the control program for controlling each component of the computer 100. Although the control program is described as being installed in the storage device 106 in this exemplary embodiment, the configuration is not limited to this. The control program according to this exemplary embodiment may be provided in a state where it is stored in a computer readable storage medium. For example, the control program according to this exemplary embodiment may be provided in a state where it is stored in an optical disk, such as a compact disc read-only memory (CD-ROM) or a digital versatile disc read-only memory (DVD-ROM), or may be provided in a state where it is stored in a semiconductor memory, such as a universal serial bus (USB) memory or a memory card. The control program according to this exemplary embodiment may be acquired from an external apparatus via a communication line connected to the communication interface 108.

The communication interface 108 performs communication control for communication between the computer 100 and the printer 200. The computer 100 and the printer 200 are connected to each other directly or via the network.

The display device 110 is a liquid crystal monitor and displays screen data of an operation screen generated in the computer 100.

The input device 112 includes a keyboard, a mouse, and a touchpad. The input device 112 is used for inputting a designated color and for inputting a change to the print settings. This input process is performed while a user views an image displayed on the display device 110. The input device 112 is also used for inputting setting information when a printing condition is to be adjusted, where necessary. The printing condition is adjusted by checking a color-reproducibility evaluation result obtained by the reproducibility evaluator 124 and a simulator 126 that are to be described later.

In this description, the term "designated color" refers to a color designated in accordance with, for example, color identification information for identifying a color. The color identification information is specified based on a color name and a color code, such as "Pantone (registered trademark) 048" and "DIC (registered trademark) 048". Such a designated color is also called a spot color (or a custom color). A designated color is a unique color defined based on a specific color chart and is widely used in the print industry.

Fig. 3 is a functional block diagram of the computer 100. As shown in Fig. 3, the computer 100 causes the CPU 102 to execute the control program stored in the storage device 106. Accordingly, the computer 100 functions as a display controller 116, an input unit 118, the colorant information acquirer 120, a chart generator 122, the reproducibility evaluator 124, the simulator 126, a colorant property database 128, and a designated color database 130.

The display controller 116 generates a menu screen used by the user for inputting a designated color, and causes the display device 110 to display the menu screen. The display controller 116 causes the display device 110 to display an image of a color reproduction sample generated by the chart generator 122, to be described later. The display controller 116 also causes the display device 110 to display a numerical value of a color difference between the designated color and a color in the color reproduction sample. The numerical value of the color difference is calculated by the reproducibility evaluator 124.

The input unit 118 receives a designation of the designated color by the user via an interface for selecting the designated color used by the user. The designation of the designated color may involve the user inputting a color name of the designated color to the menu screen. The input of the designated color may involve the user selecting the color name thereof from a list of color names displayed on the menu screen.

The colorant information acquirer 120 acquires the types of colorants available in the printer 200 connected to the computer 100. In detail, the colorant information acquirer 120 acquires the types of colorants currently installed in the printer 200. Examples of the types of colorants include colorants of the basic colors, such as cyan (C), magenta (M), yellow (Y), and black (K), and colorants of special colors, such as fluorescent green, fluorescent pink, gold, and silver.

The chart generator 122 generates and outputs a color reproduction sample to assist with the checking of color reproduction in printing. In detail, the chart generator 122 generates an image of a color reproduction sample corresponding to a case where the designated color is reproduced by using the colorants of the basic colors alone. The chart generator 122 also generates an image of a color reproduction sample corresponding to a case where the designated color is reproduced by using the colorants of the basic colors and a colorant of a special color other than the basic colors. The display controller 116 causes the display device 110 to display the generated image of the color reproduction sample. If the printer is equipped with multiple special colors, the chart generator 122 generates a color reproduction sample for each combination including at least one of the multiple special colors.

If a received print command includes a designated color, the chart generator 122 generates a color reproduction sample of the relevant designated color. Moreover, the chart generator 122 causes the display controller 116 to display the color reproduction sample on the display device 110.

The chart generator 122 may output the generated image of the color reproduction sample to the printer 200 and cause the printer 200 to print the generated image of the color reproduction sample onto a sheet surface.

In addition to a chart image, the chart generator 122 may present a quantitative evaluation related to color reproduction. This evaluation is obtained as a result of calculation by the reproducibility evaluator 124, to be described later. The presentation format may include either one of a text format and a graph format.

The reproducibility evaluator 124 calculates a color difference between the designated color and a color in the color reproduction sample, and outputs the color difference as a numerical value. In detail, the reproducibility evaluator 124 calculates a color difference, such as ΔE value, between the designated color and a color reproduced by using the basic and special colors. The calculation of the color difference involves using a color difference calculation method based on an international standard, such as CIEDE2000. The reproducibility evaluator 124 numerically presents the color reproduction accuracy in this manner so as to assist with an analysis of color reproducibility.

The simulator 126 suggests using a colorant of a special color not installed in the printer 200 if the color difference from the designated color in a case where the designated color is reproduced by using the colorant of the special color not installed in the printer 200 is smaller than the color difference from the designated color in a case where the designated color is reproduced by using the colorants installed in the printer 200. Specifically, when the designated color is to be reproduced, the simulator 126 compares the color difference between the case where the colorant not installed in the printer 200 is used and the case where an additional colorant is hypothetically used, so as to present an optimal color reproduction option. For example, even in a case where the printer 200 is not equipped with a colorant of fluorescent orange (O), color reproducibility when fluorescent orange (O) is hypothetically used is obtained, so that if more accurate color reproducibility is possible, an addition of the special color is suggested. Moreover, the reproduction result is visually displayed on the display device 110. The reproduction result provided also includes the numerical value (e.g., ΔE value) of the color difference from the designated color as well as cost comparison information, thereby assisting the user with appropriate selection of the print settings.

The colorant property database 128 has a color profile stored therein. This profile is a data set defining conversion information for color reproduction in a specific device. Target devices include the display device 110 and the printer 200. This profile is based on a conversion table based on color measurement data measured using a colorimeter. The color profile is associated with RGB values and CMYK values that are optimal for reproducing the designated color. Moreover, the colorant property database 128 also has stored therein color reproduction correction data. This correction data includes a correction coefficient and a color correction matrix for correcting the color reproduction in a specific printing condition.

The designated color database 130 is a correspondence table in which a color name (which may include a color code) and an original color value of the designated color are associated with each other. The designated color database 130 includes color value information (e.g., Pantone (registered trademark) and DIC (registered trademark)) of the designated color based on a standard color chart and makes general color definition in the print industry available for reference. The designated color database 130 may also include unique designated color information defined based on a specific printing environment or a device-specific color profile.

The designated color database 130 operates in cooperation with the colorant property database 128. In detail, an original color value (e.g., Lab value or RGB value) of the designated color acquired from the designated color database 130 is converted into a color value corresponding to a case where reproduction is performed with the colorants of the basic colors alone by using the color profile stored in the colorant property database 128 or into a color value corresponding to a case where the colorants of the basic and special colors are used. In this case, a reproduced color resembling the actual print result is calculated in view of the types of colorants installed in the printer 200.

When calculating the ΔE value (color difference), the reproducibility evaluator 124 compares the color value in the designated color database 130 with the color value of the color reproduction sample calculated using the colorant property database 128. This color difference information serves as an indicator when the user checks the reproducibility of the designated color to select optimal print settings.

The designated color database 130 allows manual addition and editing by the user and also allows management of unique designated color information suitable for a specific printing environment. Moreover, the designated color database 130 is configured such that, in addition to the designated color based on the standard color chart, information about, for example, a custom color or a corporation brand color is also registerable.

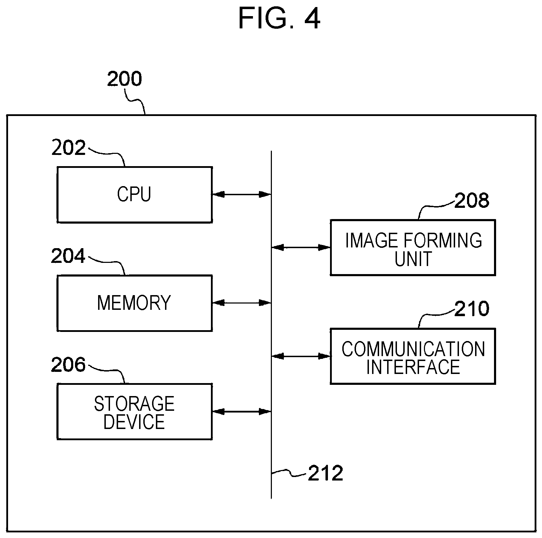

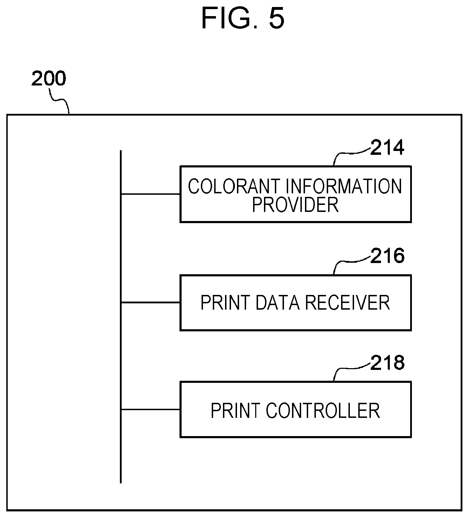

The printer 200 will now be described with reference to Figs. 4 and 5. Fig. 4 illustrates a hardware configuration of the printer 200. As shown in Fig. 4, the printer 200 includes a CPU 202, a memory 204, a storage device 206, an image forming unit 208, and a communication interface 210, each of which is connected to a control bus 212.

The CPU 202 is a control microprocessor. The CPU 202 controls the operation of each component of the printer 200 based on a control program stored in the storage device 206.

The memory 204 temporarily stores print data to be printed by the image forming unit 208 of the printer 200.

The storage device 206 is constituted of a hard disk drive (abbreviated as "HDD") or a solid state drive (abbreviated as "SSD"), and stores the control program for controlling each component of the printer 200. Although the control program of the printer 200 is described as being installed in the storage device 206 in this exemplary embodiment, the configuration is not limited to this. The control program according to this exemplary embodiment may be provided in a state where it is stored in a computer readable storage medium. For example, the control program according to this exemplary embodiment may be provided in a state where it is stored in an optical disk, such as a CD-ROM or a DVD-ROM, or may be provided in a state where it is stored in a semiconductor memory, such as a USB memory or a memory card. The control program according to this exemplary embodiment may be acquired from an external apparatus via a communication line connected to the communication interface 210.

The image forming unit 208 performs a printing process on image data received from the computer 100 in accordance with the print settings similarly received from the computer 100, thereby printing the image data onto a recording medium, such as paper. The image forming unit 208 includes, for example, five image forming units. The five image forming units are configured to form an image onto a recording medium by using the colorants of the basic colors, namely, yellow (Y), magenta (M), cyan (C), and black (K), and the colorant of the fluorescent pink (P) color as one of the special colors.

The communication interface 210 performs communication control for communicating with the computer 100 connected thereto directly or via the network.

Fig. 5 is a functional block diagram of the printer 200. As shown in Fig. 5, the printer 200 executes the control program stored in the storage device 206. Accordingly, the printer 200 functions as a colorant information provider 214, a print data receiver 216, and a print controller 218.

The colorant information provider 214 acquires the types and statuses of the colorants installed in the printer 200 and provides the acquired information to the computer 100. In this exemplary embodiment, the colorant information provider 214 acquires the types, such as the colorants of the basic colors, namely, yellow (Y), magenta (M), cyan (C), and black (K), installed in the printer 200 and colorants of two special colors (fluorescent pink (P) and fluorescent green (G)), and provides a notification to the computer 100. The colorant information provider 214 determines whether or not printing is possible using the special colors, and provides a notification. Moreover, the colorant information provider 214 monitors the status of each colorant, such as the remaining amount thereof, the availability thereof, and the replacement necessity thereof, where necessary.

The print data receiver 216 receives image data and a print command from the computer 100. The print data receiver 216 converts the received image data and print command into a printable data format. The converted data is temporarily stored in the memory 204.

The print controller 218 controls the image forming unit 208 in accordance with the print command. The print controller 218 prints the image data in the printable format stored in the memory 204 onto a recording medium, such as paper.

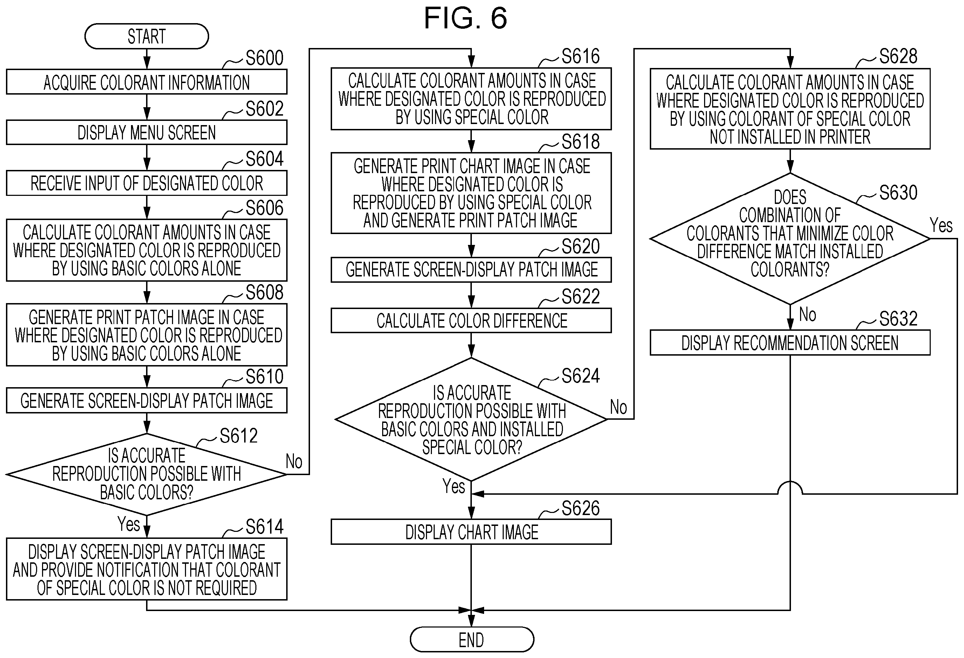

Next, a color reproduction evaluation operation performed in the information processing system 10 described above will be described with reference to Fig. 6. First, in step S600, the colorant information acquirer 120 acquires the types of colorants installed in the printer 200. The colorant information acquirer 120 inquires the printer 200 about the installed colorants. As mentioned above, in this exemplary embodiment, the printer 200 is equipped with the colorants of the basic colors, namely, yellow (Y), magenta (M), cyan (C), and black (K), and the colorant of the fluorescent pink (P) color as one of the special colors. The colorant information provider 214 of the printer 200 notifies the computer 100 of the types of colorants installed in the printer 200. In this case, the colorant information provider 214 notifies the computer 100 that the colorants of the aforementioned four colors and the colorant of the fluorescent pink (P) color as a special color are installed. The colorant information acquirer 120 acquires the notification information and stores the information into the memory 104.

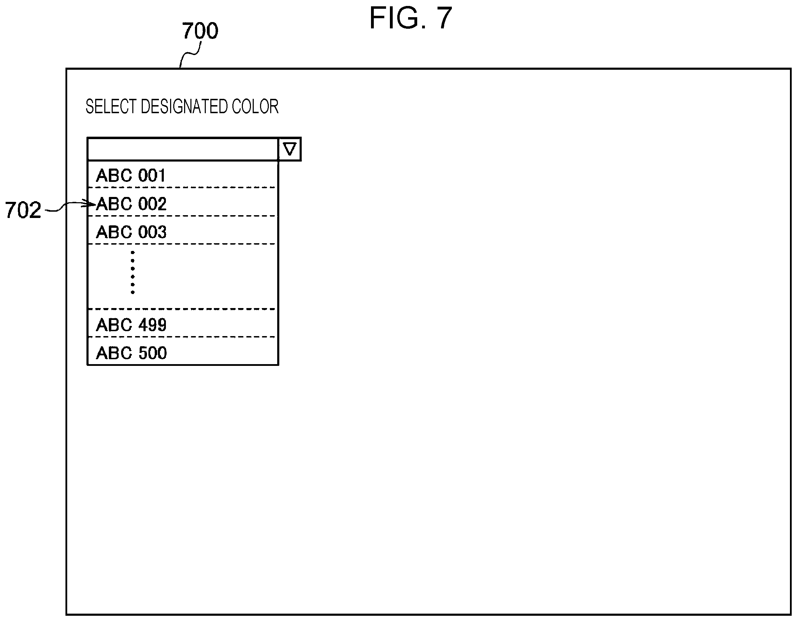

Then, in step S602, the display controller 116 displays an input screen 700. This screen is used by the user for inputting a designated color. An example of the input screen 700 is shown in Fig. 7.

The input screen 700 in Fig. 7 includes a designated color selection field 702 used for selecting a designated color. The designated color selection field 702 displays multiple color names in the form of a dropdown list for allowing the user to select and input a designated color. For example, the dropdown list displays color names (or color codes), such as "ABC 001", "ABC 002", ..., "ABC 500" and so on.

In step S604, the input unit 118 receives an operation performed by the user for selecting a designated color from the dropdown list. The input unit 118 may receive an operation performed by the user for directly inputting a color name. In this exemplary embodiment, the input unit 118 allows the user to select one designated color from the dropdown list. Alternatively, the input unit 118 may allow the user to select multiple designated colors. To simply the description, this exemplary embodiment relates to a case where one designated color is selected. The following description relates to a case where the user selects "ABC 048" as a designated color. When the user selects the designated color, the input unit 118 temporarily stores the color name of the designated color into the memory 104 and proceeds to step S606.

In step S606, the chart generator 122 calculates the component amounts of colorants in a case where the designated color is reproduced by using the colorants of the basic colors alone. In detail, the chart generator 122 determines the component amount of each colorant by referring to the colorant property database 128. For example, the component amounts of the colorants in the case where the designated color "ABC 048" is reproduced by using the basic colors alone are determined as 4% of cyan (C), 70% of magenta (M), 0% of yellow (Y), and 0% of black (K) from the colorant property database 128. The determined component amounts of the colorants are temporarily stored in the memory 104.

In step S608, the chart generator 122 generates a color reproduction sample based on the calculated data. This color reproduction sample is a print color-reproduction-sample image for the designated color "ABC 048". The print color-reproduction-sample image is converted into an outputtable format, such as PDF, PostScript, or a raster image. The converted image data is temporarily stored in the memory 104.

In step S610, the chart generator 122 generates a screen-display color-reproduction-sample image from the print color-reproduction-sample image. This is achieved by the chart generator 122 converting the print color-reproduction-sample image into an RGB color space. In this case, the color profile in the colorant property database 128 is used. For example, the print color-reproduction-sample image for the designated color "ABC 048" is converted into a screen-display color-reproduction-sample image. In detail, the chart generator 122 uses an international color consortium (ICC) profile to calculate RGB values from the print color-reproduction-sample image. For example, R = 225, G = 94, and B = 173. The chart generator 122 generates the screen-display color-reproduction-sample image based on the calculated RGB values. The generated image is temporarily stored in the memory 104.

In step S612, the reproducibility evaluator 124 determines whether or not the designated color is accurately reproducible by using the basic colors alone of the printer 200. Specifically, it is determined whether or not the designated color is within the color gamut reproducible using the basic colors of the printer 200. If it is determined that the designated color is sufficiently reproducible with the basic colors alone, the process proceeds to step S614.

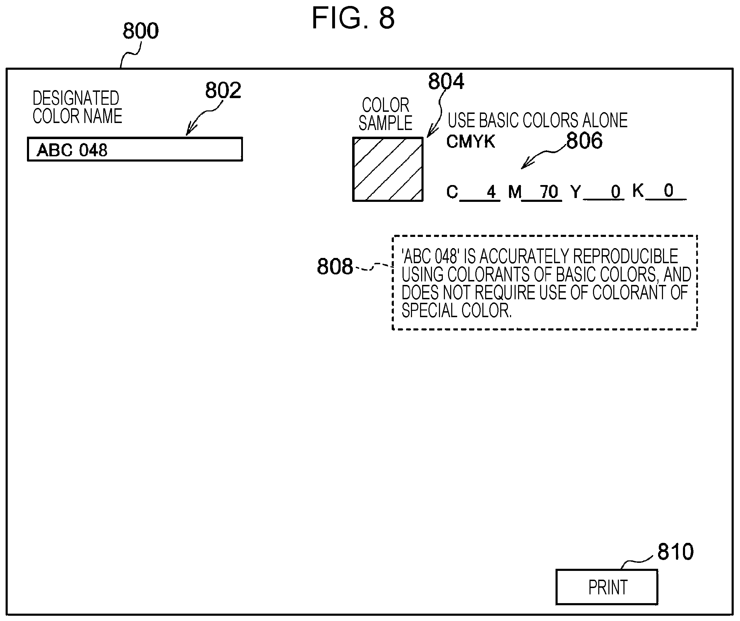

In step S614, the display controller 116 displays the screen-display color-reproduction-sample image generated in step S610 on the screen of the display device 110. Fig. 8 illustrates an example of an output display screen 800 for the screen-display color-reproduction-sample image. The output display screen 800 includes a designated color name display field 802, a color sample display field 804, and a colorant component-amount display field 806. The designated color name display field 802 displays the name "ABC 048" of the designated color selected by the user. The color sample display field 804 displays the screen-display color-reproduction-sample image generated in step S610. The colorant component-amount display field 806 displays the component amounts of the colorants obtained in step S606 and corresponding to the case where the designated color is reproduced by using the colorants of the basic colors alone. In this exemplary embodiment, the component amounts of the colorants are displayed such that cyan (C) = 4, magenta (M) = 70, yellow (Y) = 0, and black (K) = 0.

Furthermore, the reproducibility evaluator 124 provides a notification message indicating that the colorant of the special color is not required. This notification is performed when the output display screen 800 for the screen-display color-reproduction-sample image is displayed. The reproducibility evaluator 124 commands the display controller 116 to display this message. In response to this command, the display controller 116 displays, on the screen of the display device 110, the message indicating that the colorant of the special color is not required. The output display screen 800 in Fig. 8 further includes a message display field 808. In this case, the message displayed on the message display field 808 reads "'ABC 048' IS ACCURATELY REPRODUCIBLE USING COLORANTS OF BASIC COLORS, AND DOES NOT REQUIRE USE OF COLORANT OF SPECIAL COLOR".

The output display screen 800 in Fig. 8 also includes a print command button 810. When the user selects the print command button 810, the chart generator 122 issues a print command to the printer 200. The chart generator 122 commands the printer 200 to print the print color-reproduction-sample image of the designated color. For example, the command is for printing the print color-reproduction-sample image of the designated color "ABC 048". This image is temporarily stored in the memory 104. The printer 200 receives this command and forms the print color-reproduction-sample image on a sheet surface. After the output display screen 800 is displayed, the process ends.

If it is determined in step S612 that the designated color is outside the color gamut reproducible using the basic colors alone, the process proceeds to step S616. In step S616, the chart generator 122 generates a color sample (i.e., a patch) reproducible using the colorant of the special color determined as being installed in the printer 200 in step S600 in addition to the basic colors. In the case of this exemplary embodiment, the chart generator 122 refers to the colorant property database 128 to acquire the component amounts of the colorants in a case where the designated color "ABC 048" is reproduced by using the colorant of the fluorescent pink (P) color as a special color in addition to the basic colors. For example, the component amounts of the colorants are determined as 4% of cyan (C), 40% of magenta (M), 0% of yellow (Y), 0% of black (K), and 30% of fluorescent pink (P).

In step S618, the chart generator 122 generates a print color-reproduction-sample image based on the calculated data. This image is an image to be printed when the designated color is reproduced by using the colorant of the special color installed in the printer 200. This image is arranged alongside the print color-reproduction-sample image generated in step S608 and corresponding to the case where the designated color is reproduced by using the basic colors alone. The print image using the colorant of the special color and the print image using the basic colors alone constitute a print chart image. The print chart image is converted into an outputtable data format, such as PDF, PostScript, or a raster image. The converted image is temporarily stored in the memory 104.

In step S620, the chart generator 122 generates a screen-display color-reproduction-sample image. This image is generated based on the color profile in the colorant property database 128 by using the aforementioned print color-reproduction-sample image. In detail, the chart generator 122 uses the ICC profile to calculate RGB values from the print color-reproduction-sample image. For example, R = 235, G = 80, and B = 190. Based on the calculated RGB values, the chart generator 122 generates the screen-display color-reproduction-sample image to be displayed on the display device 110. In this case, the generated screen-display color-reproduction-sample image is generated as a screen-display chart image. The screen-display chart image is arranged alongside the screen-display color-reproduction-sample image in the case where the designated color is reproduced by using the basic colors alone. Accordingly, the screen-display color-reproduction-sample image in the case where the basic colors alone are used and the screen-display color-reproduction-sample image in the case where the special color is additionally used may be compared with each other.

In step S622, the reproducibility evaluator 124 calculates a color difference between an actual color value of the designated color and a color value corresponding to the case where the designated color is printed by using the basic colors alone of the printer 200, and temporarily stores the calculation result into the memory 104. The reproducibility evaluator 124 also calculates a color difference between the actual color value of the designated color and a color value corresponding to the case where the designated color is printed by using the colorant of the special color in addition to the colorants of the basic colors, and temporarily stores the calculation result into the memory 104. For example, based on CIEDE2000, the reproducibility evaluator 124 calculates a color difference (ΔE) between the designated color and each reproduced color, and quantitatively calculates how much the reproduced color resembles the designated color by using a numerical value. In this exemplary embodiment, for example, it is assumed that the color difference ΔE between the actual color value of the designated color and the color value corresponding to the case where the designated color is printed by using the basic colors alone of the printer 200 is equal to 10, and that the color difference ΔE between the actual color value of the designated color and the color value corresponding to the case where the designated color is printed by adding the colorant of the special color to the colorants of the basic colors is equal to 3.5. Information about the calculated color differences is temporarily stored in the memory 104.

In step S624, the simulator 126 determines the reproducibility of the designated color. Specifically, it is determined whether or not the designated color is accurately reproducible by using the basic colors of the printer 200 and the special color installed in the printer 200. In other words, it is determined whether or not the designated color is within the color gamut reproducible using the basic colors of the printer 200 and the special color installed therein. If it is determined that the designated color is sufficiently reproducible using the basic colors and the installed special color, the process proceeds to step S626.

In step S626, the display controller 116 displays the screen-display chart image generated in step S620. This chart image is displayed on the screen of the display device 110. In this case, the display controller 116 performs the display by also including the information calculated in step S622. This information includes the color difference between the actual color value of the designated color and the color value corresponding to the case where the designated color is printed by using the basic colors alone of the printer 200. Moreover, this information also includes the color difference between the actual color value of the designated color and the color value corresponding to the case where the designated color is printed by additionally using the installed colorant of the special color.

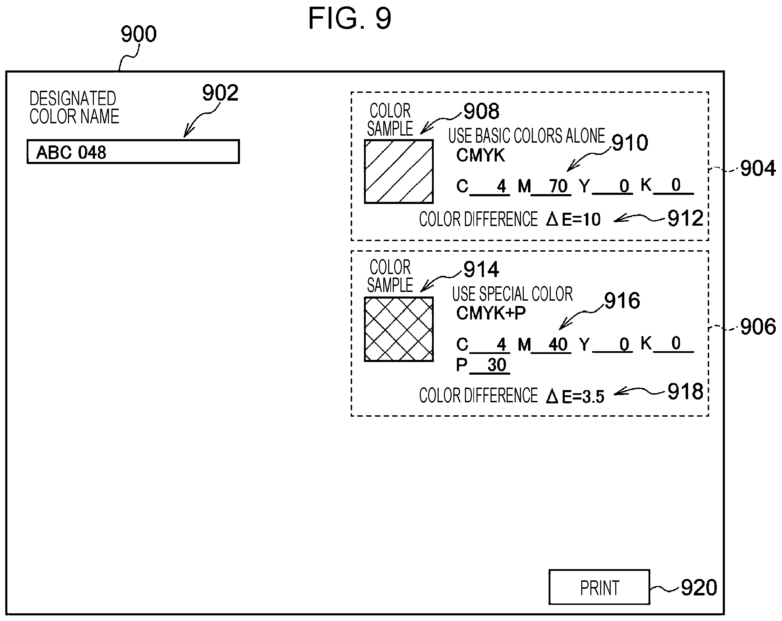

Fig. 9 illustrates an example of an output display screen 900 for the screen-display chart image. The output display screen 900 includes a designated color name display field 902 and an information field 904 for when the basic colors alone are used. The output display screen 900 also includes an information field 906 for when the colorant of the special color installed in the printer 200 is additionally used.

The designated color name display field 902 displays the name "ABC 048" of the designated color selected by the user. The information field 904 for when the basic colors alone are used includes a color sample display field 908, a colorant component-amount display field 910, and a color difference display field 912. The color sample display field 908 displays the screen-display color-reproduction-sample image generated in step S610 and corresponding to the case where the designated color is reproduced by using the basic colors alone. The colorant component-amount display field 910 displays the component amounts of the colorants obtained in step S606 and corresponding to the case where the designated color is reproduced by using the colorants of the basic colors alone. In this exemplary embodiment, the component amounts of the colorants are displayed such that cyan (C) = 4, magenta (M) = 70, yellow (Y) = 0, and black (K) = 0. The color difference display field 912 displays the color difference, calculated in step S622, between the actual color value of the designated color and the color value corresponding to the case where the designated color is printed by using the basic colors alone of the printer 200. In this exemplary embodiment, the displayed color difference ΔE is equal to 10.

The information field 906 for when the colorant of the special color installed in the printer 200 is additionally used includes a color sample display field 914, a colorant component-amount display field 916, and a color difference display field 918. The color sample display field 914 displays the screen-display color-reproduction-sample image generated in step S620 and corresponding to the case where the designated color is reproduced by additionally using the colorant of the special color installed in the printer 200. The colorant component-amount display field 916 displays the component amounts of the colorants obtained in step S616 and corresponding to the case where the designated color is reproduced by additionally using the special color installed in the printer 200. In this exemplary embodiment, cyan (C) is displayed as 4%, magenta (M) is displayed as 40%, yellow (Y) is displayed as 0%, black (K) is displayed as 0%, and fluorescent pink (P) is displayed as 30%. The color difference display field 918 displays the color difference, calculated in step S622, between the actual color value of the designated color and the color value corresponding to the case where the designated color is printed by additionally using the special color installed in the printer 200. In this exemplary embodiment, the displayed color difference ΔE is equal to 3.5.

The output display screen 900 in Fig. 9 also includes a print command button 920. The user selects the print command button 920. Then, the chart generator 122 commands the printer 200 to print the print chart image of the designated color. This print chart image is generated in step S618 and is stored in the memory 104. In the case of Fig. 9, the chart generator 122 commands the printer 200 to print the print chart image of the designated color "ABC 048". The printer 200 receives this command and forms the print chart image on a sheet surface. After the output display screen 900 is displayed, the process ends.

If it is determined in step S624 that the designated color is outside the color gamut reproducible using the basic colors and the installed colorant, the process proceeds to step S628.

In step S628, the simulator 126 refers to the colorant property database 128 to acquire the component amounts of colorants in a case where the designated color is reproduced by using a colorant of a special color not installed in the printer 200, such as fluorescent green (G) or fluorescent orange (O).

In this case, the colorant property database 128 includes an extended color profile including the colorant of the relevant special color. Moreover, the simulator 126 determines a combination of colorants that minimize the color difference (ΔE) from the designated color to be reproduced.

Specifically, the simulator 126 compares the color values determined by the reproducibility evaluator 124 and selects the colorants that minimize the color difference. In detail, the simulator 126 acquires the actual color value of the designated color. Moreover, the simulator 126 acquires the color value corresponding to the case where the designated color is reproduced by using the colorants installed in the printer 200. Furthermore, the simulator 126 acquires the color value corresponding to the case where the designated color is reproduced by using the colorant of the special color not installed in the printer 200. Then, the simulator 126 compares the color values and selects the colorants that minimize the color difference from the actual color value of the designated color.

In step S630, the simulator 126 determines a combination of colorants. Specifically, it is determined whether or not the combination of colorants that minimize the color difference is the same as the combination of colorants installed in the printer 200. As a result, if the combination of colorants that minimize the color difference is the same, step S626 is performed. In step S626, a screen-display chart image shown in Fig. 9 and identical to that in step S620 described above is displayed on the screen of the display device 110. Subsequently, the process ends.

In step S630, if the combination of colorants that minimize the color difference is different from the colorants installed in the printer 200, the process proceeds to step S632.

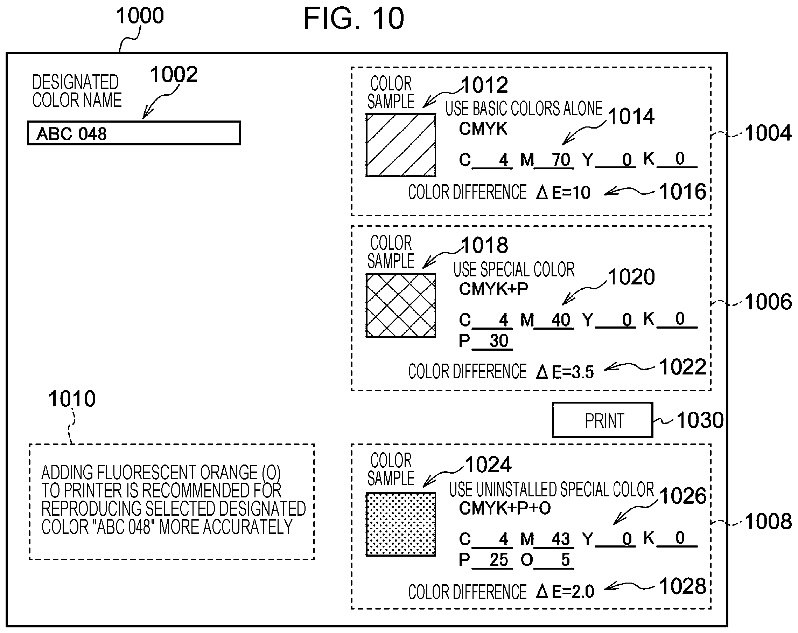

In step S632, the simulator 126 displays a recommendation screen 1000 on the display device 110. The recommendation screen 1000 is generated by the display controller 116 and is displayed on the display device 110. An example of the recommendation screen 1000 is shown in Fig. 10.

The recommendation screen 1000 in Fig. 10 presents the colorants required for accurately reproducing the designated color. The recommendation screen 1000 includes a designated color name display field 1002, an information field 1004 for when the basic colors alone are used, an information field 1006 for when the colorant of the special color installed in the printer 200 is additionally used, a recommended colorant information field 1008, and a message display field 1010.

The designated color name display field 1002 displays the name "ABC 048" of the designated color selected by the user. The information field 1004 for when the basic colors alone are used includes a color sample display field 1012, a colorant component-amount display field 1014, and a color difference display field 1016. The color sample display field 1012 displays the screen-display color-reproduction-sample image generated in step S610 and corresponding to the case where the designated color is reproduced by using the basic colors alone. The colorant component-amount display field 1014 displays the component amounts of the colorants obtained in step S606 and corresponding to the case where the designated color is reproduced by using the colorants of the basic colors alone. In this exemplary embodiment, the component amounts of the colorants are displayed such that cyan (C) = 4, magenta (M) = 70, yellow (Y) = 0, and black (K) = 0. The color difference display field 1016 displays the color difference, calculated in step S622, between the actual color value of the designated color and the color value corresponding to the case where the designated color is printed by using the basic colors alone of the printer 200. In this exemplary embodiment, the displayed color difference ΔE is equal to 10.

The information field 1006 for when the colorant of the special color installed in the printer 200 is additionally used includes a color sample display field 1018, a colorant component-amount display field 1020, and a color difference display field 1022. The color sample display field 1018 displays the screen-display color-reproduction-sample image generated in step S620 and corresponding to the case where the designated color is reproduced by additionally using the colorant of the special color installed in the printer 200. The colorant component-amount display field 1020 displays the component amounts of the colorants obtained in step S616 and corresponding to the case where the designated color is reproduced by additionally using the special color installed in the printer 200. In this exemplary embodiment, cyan (C) is displayed as 4%, magenta (M) is displayed as 40%, yellow (Y) is displayed as 0%, black (K) is displayed as 0%, and fluorescent pink (P) is displayed as 30%. The color difference display field 1022 displays the color difference, calculated in step S622, between the actual color value of the designated color and the color value corresponding to the case where the designated color is printed by additionally using the special color installed in the printer 200. In this exemplary embodiment, the displayed color difference ΔE is equal to 3.5.

The recommended colorant information field 1008 includes a color sample display field 1024, a colorant component-amount display field 1026, and a color difference display field 1028. The designated color name display field 1002 displays the name "ABC 048" of the designated color selected by the user. The color sample display field 1024 includes a screen-display color-reproduction-sample image corresponding to a case where the designated color is reproduced by additionally using a colorant of a special color not installed in the printer 200. The screen-display color-reproduction-sample image is generated by the chart generator 122. Specifically, this image is an image converted into an RGB color space based on the component amounts of the colorants by the chart generator 122 in step S628.

The colorant component-amount display field 1026 displays the component amounts of the colorants obtained in step S628 and corresponding to the case where the designated color is reproduced by additionally using the special color not installed in the printer 200. In this exemplary embodiment, cyan (C) is displayed as 4%, magenta (M) is displayed as 43%, yellow (Y) is displayed as 0%, black (K) is displayed as 0%, fluorescent pink (P) is displayed as 25%, and fluorescent orange (O) is displayed as 5%. The color difference display field 1028 displays a color difference, calculated in step S628, between the actual color value of the designated color and the color value corresponding to the case where the designated color is printed by additionally using the special color not installed in the printer 200. In this exemplary embodiment, the displayed color difference ΔE is equal to 2.0.

The message display field 1010 displays a message suggesting the user to use the colorant not installed in the printer 200. In this exemplary embodiment, the displayed message reads "ADDING FLUORESCENT ORANGE (O) TO PRINTER IS RECOMMENDED FOR REPRODUCING SELECTED DESIGNATED COLOR "ABC 048" MORE ACCURATELY".

The recommendation screen 1000 includes a print command button 1030. The user selects the print command button 1030. Then, the chart generator 122 commands the printer 200 to print the print chart image of the designated color. This print chart image is generated in step S618 and is stored in the memory 104. In the case of Fig. 10, the chart generator 122 commands the printer 200 to print the print chart image of the designated color "ABC 048". The printer 200 receives this command and forms the print chart image on a sheet surface. This print chart does not include a chart image corresponding to the case where the designated color is reproduced by using the colorant not installed in the printer 200. As a result of the above steps, the process in the information processing system 10 is completed.

According to this exemplary embodiment, a comparison chart corresponding to the case where the colorants of the basic colors and the special color installed in the printer 200 are used is displayed. Moreover, the comparison chart corresponding to the case where the colorants of the basic colors and the special color installed in the printer 200 are used is printed. There may be a case where the designated color is not accurately reproducible with only the colorants of the basic and special colors installed in the printer 200. In that case, an optimal colorant configuration is suggested by presenting candidates for special colors that are addable. Accordingly, the user may be prompted to select appropriate colorants for reproducing the designated color more accurately.

In the above exemplary embodiment, the user has to select a designated color. However, the above exemplary embodiment of the present disclosure is not limited thereto. The chart generator 122 may determine a designated color included in the print command received by the computer 100. If the print command includes one designated color, the process described in the above exemplary embodiment is performed with respect to the designated color. If the print command includes multiple designated colors, the process described in the above exemplary embodiment is performed with respect to each of the multiple designated colors.

Specifically, the chart generation, the color difference calculation, and the display on the display device 110 are performed for each designated color with respect to three cases, namely, a first case (1) where the designated color is reproduced by using the basic colors alone, a second case (2) where the designated color is reproduced by using the colorant of the special color installed in the printer 200, and a third case (3) where the designated color is reproduced by using the colorant of the special color not installed in the printer 200. Based on these display results, the user optimizes the print settings.

In the actual printing process, the print result varies depending on the type of sheet. Therefore, when the user is to select a designated color, the user may be allowed to select a sheet profile. In that case, the profiles of sheets supported by the printer 200 are retained in the colorant property database 128. Each sheet profile contains correction information for each type of sheet. This sheet profile includes, for each sheet, correction information for the component amounts of the colorants in the case where the designated color is reproduced by using the basic colors. The sheet profile includes correction information for the component amounts of the colorants in the case where the designated color is reproduced by using the special color installed in the printer 200. The sheet profile includes correction information for the component amounts of the colorants in the case where the designated color is reproduced by using the special color not installed in the printer 200.

In the exemplary embodiment, the processes are performed by any computer. The computer may perform the processes by using a processor serving as hardware, a program serving as software, or combination of these. In this case, the processor is configured to perform the processes in the exemplary embodiment in cooperation with the program and may function as a unit or a means in the exemplary embodiment. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiment, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program according to the present application may be provided as a program product.

The operation of the processor in the above exemplary embodiment may be implemented not only by a single processor but also by multiple processors located physically away from each other and operating in cooperation with each other. The order in which the processor performs the processes is not limited to the order described in the above exemplary embodiment and may be changed appropriately.

The term "system" in the exemplary embodiment includes both a system constituted of multiple apparatuses and a system constituted of a single apparatus. Moreover, the exemplary embodiment of the present disclosure is applicable to a program and a program product.

The foregoing description of the exemplary embodiment of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
a processor configured to:
generate and output an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

(((2))) The information processing system according to (((1))), wherein the processor is configured to generate and output the color reproduction sample of the designated color designated via an interface used for selecting the designated color by a user.

(((3))) The information processing system according to (((1))), wherein the processor is configured to generate and output the color reproduction sample of the designated color if the designated color is included in a print command for image formation.

(((4))) The information processing system according to (((2))) or (((3))), wherein the processor is configured to output a numerical value of a color difference between the designated color and a color in the generated color reproduction sample.

(((5))) The information processing system according to (((4))), wherein if the colorant of the special color comprises a plurality of colorants of special colors installed in a printer, the processor is configured to generate and output the color reproduction sample for each combination including at least one of the plurality of special colors.

(((6))) The information processing system according to (((4))), wherein the processor is configured to output the image of the color reproduction sample by performing at least one of printing of the image onto a sheet surface and displaying of the image on a screen.

(((7))) The information processing system according to (((6))), wherein the processor is configured to display the image of the color reproduction sample on the screen and to display the numerical value of the color difference between the designated color and the color in the generated color reproduction sample on the screen.

(((8))) The information processing system according to any one of (((1))) to (((7))), wherein if a color difference from the designated color in a case where the designated color is reproduced by using a colorant of a special color not installed in a printer is smaller than a color difference from the designated color in a case where the designated color is reproduced by using the colorants installed in the printer, the processor is configured to suggest using the colorant of the special color not installed in the printer.

(((9))) The information processing system according to (((8))), wherein the processor is configured to output a numerical value of the color difference from the designated color in the case where the designated color is reproduced by using the colorant of the special color not installed in the printer.

(((10))) A program causing a computer of an information processing system including a processor to execute a process comprising:
generating and outputting an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

Effects of the appendix will be described below.

The information processing system according to (((1))) may enable a user to check the reproducibility in the case where the designated color designated based on the color identification information including the color name and the color code is reproduced by using the colorant of the basic color alone and in the case where the designated color is reproduced by using the colorant of the basic color and the colorant of the special color.

The information processing system according to (((2))) may enable the user to select a color reproduction method with respect to the designated color selected by the user.

With the information processing system according to (((3))), the reproducibility of the designated color included in the print command may be compared between the case where the designated color is reproduced by using the colorant of the basic color alone and the case where the designated color is reproduced by using the colorant of the special color.

The information processing system according to (((4))) may enable a quantitative evaluation of color reproduction accuracy, and may enable the user to ascertain the reproduction result more accurately than in a case where the color difference is not output as a numerical value.

The information processing system according to (((5))) enables the user to consider an optimal combination of special colors in the case where multiple special colors are available.

The information processing system according to (((6))) enables checking of color reproducibility without having to physically check the color reproduction resembling the actual print result or without having to physically perform printing.

The information processing system according to (((7))) enables quantitative checking of color reproducibility on the screen without having to physically perform printing.

The information processing system according to (((8))) may present to the user that a color with a small color difference from the designated color is reproducible better by using the colorant of the special color not installed in the printer.

With the information processing system according to (((9))), the effect achieved when the colorant of the special color not installed in the printer is used may be quantitatively presented to the user.

The program according to (((10))) may cause the computer to perform output so as to enable a user to check the reproducibility in the case where the designated color designated based on the color identification information including the color name and the color code is reproduced by using the colorant of the basic color alone and in the case where the designated color is reproduced by using the colorant of the basic color and the colorant of the special color.

## Claims

1. An information processing system comprising:
a processor configured to:
generate and output an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

2. The information processing system according to claim 1, wherein the processor is configured to generate and output the color reproduction sample of the designated color designated via an interface used for selecting the designated color by a user.

3. The information processing system according to claim 1, wherein the processor is configured to generate and output the color reproduction sample of the designated color if the designated color is included in a print command for image formation.

4. The information processing system according to claim 2 or 3, wherein the processor is configured to output a numerical value of a color difference between the designated color and a color in the generated color reproduction sample.

5. The information processing system according to claim 4, wherein if the colorant of the special color comprises a plurality of colorants of special colors installed in a printer, the processor is configured to generate and output the color reproduction sample for each combination including at least one of the plurality of special colors.

6. The information processing system according to claim 4, wherein the processor is configured to output the image of the color reproduction sample by performing at least one of printing of the image onto a sheet surface and displaying of the image on a screen.

7. The information processing system according to claim 6, wherein the processor is configured to display the image of the color reproduction sample on the screen and to display the numerical value of the color difference between the designated color and the color in the generated color reproduction sample on the screen.

8. The information processing system according to any one of claims 1 to 7, wherein if a color difference from the designated color in a case where the designated color is reproduced by using a colorant of a special color not installed in a printer is smaller than a color difference from the designated color in a case where the designated color is reproduced by using the colorants installed in the printer, the processor is configured to suggest using the colorant of the special color not installed in the printer.

9. The information processing system according to claim 8, wherein the processor is configured to output a numerical value of the color difference from the designated color in the case where the designated color is reproduced by using the colorant of the special color not installed in the printer.

10. A program causing a computer of an information processing system including a processor to execute a process comprising:
generating and outputting an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

11. An information processing method comprising:
generating and outputting an image of a color reproduction sample in a case where a designated color designated based on color identification information including a color name and a color code is reproduced by using a colorant of a basic color and in a case where the designated color is reproduced by using the colorant of the basic color and a colorant of a special color other than the basic color.

## Amended claims

### Amended claims in accordance with Rule 137(2) EPC.

1. An information processing system (10) comprising:
a processor (102) configured to:
generate and output a first image of a color reproduction sample in a case where a designated color designated based on color identification information including a color name and a color code is reproduced by using a colorant of a basic color and a second image of the color reproduction sample in a case where the designated color is reproduced by using the colorant of the basic color and a colorant of a special color other than the basic color,
wherein in the case where the designated color is reproduced by using the colorant of the basic color and the colorant of the special color other than the basic color, the processor is configured to generate and output the first image arranged alongside the second image via an interface used for selecting the designated color by a user.

2. The information processing system (10) according to claim 1, wherein the processor (102) is configured to generate and output the color reproduction sample of the designated color if the designated color is included in a print command for image formation.

3. The information processing system (10) according to claim 1 or 2, wherein the processor (102) is configured to output a numerical value of a color difference between the designated color and a color in the generated color reproduction sample.

4. The information processing system (10) according to claim 3, wherein if the colorant of the special color comprises a plurality of colorants of special colors installed in a printer (200), the processor (102) is configured to generate and output the color reproduction sample for each combination including at least one of the plurality of special colors.

5. The information processing system (10) according to claim 3, wherein the processor (102) is configured to output the image of the color reproduction sample by performing at least one of printing of the image onto a sheet surface and displaying of the image on a screen.

6. The information processing system (10) according to claim 5, wherein the processor (102) is configured to display the image of the color reproduction sample on the screen and to display the numerical value of the color difference between the designated color and the color in the generated color reproduction sample on the screen.

7. The information processing system (10) according to any one of claims 1 to 6, wherein if a color difference from the designated color in a case where the designated color is reproduced by using a colorant of a special color not installed in a printer (200) is smaller than a color difference from the designated color in a case where the designated color is reproduced by using the colorants installed in the printer (200), the processor (102) is configured to suggest using the colorant of the special color not installed in the printer (200).

8. The information processing system (10) according to claim 7, wherein the processor (102) is configured to output a numerical value of the color difference from the designated color in the case where the designated color is reproduced by using the colorant of the special color not installed in the printer (200).

9. A program causing a computer of an information processing system (10) including a processor (102) to execute a process comprising:
generating and outputting a first image of a color reproduction sample in a case where a designated color designated based on color identification information including a color name and a color code is reproduced by using a colorant of a basic color and a second image of the color reproduction sample in a case where the designated color is reproduced by using the colorant of the basic color and a colorant of a special color other than the basic color,
wherein in the case where the designated color is reproduced by using the colorant of the basic color and the colorant of the special color other than the basic color, the process generates and outputs the first image arranged alongside the second image via an interface used for selecting the designated color by a user.

10. An information processing method comprising:
generating and outputting a first image of a color reproduction sample in a case where a designated color designated based on color identification information including a color name and a color code is reproduced by using a colorant of a basic color and a second image of the color reproduction sample in a case where the designated color is reproduced by using the colorant of the basic color and a colorant of a special color other than the basic color,
wherein in the case where the designated color is reproduced by using the colorant of the basic color and the colorant of the special color other than the basic color, the method generates and outputs the first image arranged alongside the second image via an interface used for selecting the designated color by a user.
